# EUROPEAN PATENT SPECIFICATION

(11) **EP 2 752 566 B1**
(45) Date of publication and mention of the grant of the patent: **30.05.2018**
(21) Application number: 12832650.1
(22) Date of filing: 12.09.2012
(51) Int. Cl.: F02C 7/18, F01D 25/12, F01K 23/10, F02C 6/18, F02C 7/16

(54) **GAS TURBINE COOLING SYSTEM, AND GAS TURBINE COOLING METHOD**
KÜHLSYSTEM FÜR GASTURBINEN UND KÜHLVERFAHREN FÜR GASTURBINEN
SYSTÈME DE REFROIDISSEMENT DE TURBINE À GAZ ET PROCÉDÉ DE REFROIDISSEMENT DE TURBINE À GAZ

(30) Priority: 15.09.2011 JP 2011201856
(43) Date of publication of application: 09.07.2014
(73) Proprietor: Mitsubishi Hitachi Power Systems, Ltd., Yokohama 220-8401 (JP)
(72) Inventor: TAKEI, Yasuhiro, Tokyo 108-8215 (JP); SAITO, Naohito, Tokyo 108-8215 (JP); FUJITA, Makoto, Tokyo 108-8215 (JP)
(74) Representative: Henkel, Breuer & Partner
(86) International application number: PCT/JP2012/073274
(87) International publication number: WO 2013/039088

(56) References cited:
- EP-A2- 0 764 767
- JP-A- H0 443 803
- JP-A- H1 037 711
- JP-A- 2001 027 133
- JP-A- 2002 004 807
- US-A- 5 251 432

## Description

### {Technical Field}

The present invention relates to a gas-turbine cooling system and a gas-turbine cooling method with which a gas turbine is cooled by steam generated in an exhaust-heat recovery boiler.

### {Background Art}

Exhaust-heat recovery boilers provided in Gas-Turbine Combined Cycles (GTCC) and Integrated coal Gasification Combined Cycles (IGCC) generate steam for steam turbines by utilizing exhaust heat from gas turbines. Because gas turbines that achieve high-efficiency are subjected to high temperatures, from the viewpoint of equipment protection, it is necessary to cool transition pieces of gas-turbine combustors and other portions that reach high temperatures under unit operation. Thus, in order to cool gas turbine combustors in the above-described power generation systems, not only is air used as a cooling medium but also steam generated in exhaust-heat recovery boilers is sometimes used.

JP H10-37711A discloses a technology with which, when an abnormality occurs during operation, cooling by steam is maintained by guiding high-pressure steam or medium-pressure steam from an exhaust-heat recovery boiler to a steam cooling system.

JP 2002-4807A discloses a technology that achieves both cooling control of high-temperature components, such as a combustor or the like, by means of steam and clearance control between rotor blades and a blade ring portion by means of steam.

JP H04-43803A discloses a combined cycle electric power plant with a gas turbine and a steam turbine and a two-stage exhaust heat recovery boiler including a high pressure drum and a low pressure drum. The gas turbine of this power plant does not include any steam-cooling of high temperature components on the basis of steam supplied from that exhaust heat boiler. A flow channel connecting the high pressure drum and the low pressure drum is provided for circulating water between the high pressure drum and the low pressure drum at the time of starting of the power plant for the purpose of accelerating the rise of steam pressure and temperature of the low pressure drum.

### {Summary of Invention}

### {Technical Problem}

Because medium-pressure steam of about 4.0 MPa to 5.0 MPa generated in an exhaust-heat recovery boiler satisfies the required cooling conditions of an object to be cooled (gas turbine), medium-pressure steam is used in many cases when steam generated in an exhaust-heat recovery boiler is used as a cooling medium.

On the other hand, because there is a demand to increase the flow of high-pressure steam generated in an exhaust-heat recovery boiler in order to improve the plant efficiency, it is necessary to keep the difference between the flow of the medium-pressure steam generated in the exhaust-heat recovery boiler and the flow of steam required for use in cooling the object to be cooled (gas turbine) as small as possible. Consequently, however, the medium-pressure steam flow may possibly be insufficient relative to the required steam flow for the object to be cooled, depending on the power generation load and fuel conditions.

Thus, it is conceivable to use a portion of the high-pressure steam generated in the exhaust-heat recovery boiler as a cooling medium; however, this involves additional processes of decreasing the temperature and pressure of the high-temperature, high-pressure steam, and thus, the plant efficiency may be deteriorated.

The present invention has been conceived in light of the above-described circumstances, and the present invention provides a gas-turbine cooling system and a gas-turbine cooling method with which a gas turbine can efficiently be cooled by using steam, without using high-pressure steam generated in an exhaust-heat recovery boiler and without decreasing the high-pressure steam generation.

### {Solution to Problem}

In order to solve the above-described problems, a gas-turbine cooling system of the present invention has the features of claim 1 and a gas-turbine cooling method of the present invention has the features of claim 4.

A gas-turbine cooling system according to a first aspect of the present invention includes a gas turbine; an exhaust-heat recovery boiler having a first system that generates first steam by means of heat exchange with exhaust heat from the gas turbine, a first drum that supplies water and steam to the first system, a second system that generates second steam having lower pressure than the first steam by means of heat exchange with the exhaust heat from the gas turbine, and a second drum that supplies water and steam to the second system; a first flow channel that connects the second system and a cooling system of the gas turbine and that supplies the second steam from the second system to the cooling system; and a second flow channel that connects the first drum and the second drum and that supplies saturated steam in the first drum from the first drum to the second drum.

With the gas-turbine cooling system according to the above-described first aspect, the water and steam in the second drum are supplied to the second system of the exhaust-heat recovery boiler, and the second steam is generated in the second system by means of heat exchange with the exhaust heat from the gas turbine. The second steam is supplied from the second system to the cooling system of the gas turbine via the first flow channel, thus cooling the gas turbine. In addition, the saturated steam in the first drum is supplied from the first drum to the second drum via the second flow channel. As a result, because the steam flow supplied from the second drum to the second system can be increased, the steam flow of the steam supplied from the second system to the cooling system of the gas turbine can also be increased.

The gas-turbine cooling system according to the above-described first aspect may have a configuration additionally including a steam-flow adjusting means for adjusting a steam flow of the saturated steam flow in the second flow channel based on a cooling state of the gas turbine.

With this configuration, because the steam flow of the saturated steam supplied from the first drum to the second drum via the second flow channel is changed in accordance with the cooling state of the gas turbine, it is possible to supply the saturated steam to the second drum in an appropriate amount for cooling the gas turbine. The outlet temperature of the gas turbine may be monitored and managed at the gas turbine, and the cooling situation of the gas turbine may indirectly be judged based on, for example, the steam flow or the like of steam flow from the cooling system of the gas turbine after cooling the gas turbine.

The gas-turbine cooling system according to the above-described first aspect may have a configuration including a gas-liquid separator that is provided so as to be downstream of the second flow channel and also so as to be upstream of the second drum or inside the second drum.

With this configuration, because the saturated steam supplied from the first drum to the second drum via the second flow channel is separated into water and steam by the gas-liquid separator, the separated steam can be supplied to the gas turbine cooling system, and thus, the gas turbine can be cooled by using steam that does not contain water. As a result, it is possible to prevent corrosion and erosion of the cooling system caused by steam containing water. In addition, because the water level in the second drum does not increase in a short period of time due to condensation of the steam, it is possible to suppress water-level fluctuations in, the second drum.

A gas-turbine cooling method according to a second aspect of the present invention is a gas-turbine cooling method for a gas-turbine cooling system provided with a gas turbine; and an exhaust-heat recovery boiler having a first system that generates first steam by means of heat exchange with exhaust heat from the gas turbine, a first drum that supplies water and steam to the first system, a second system that generates second steam having lower pressure than the first steam by means of heat exchange with the exhaust heat from the gas turbine, and a second drum that supplies water and steam to the second system, the gas-turbine cooling method including a step of supplying the second steam from the second system to a cooling system of the gas turbine; and a step of supplying saturated steam in the first drum from the first drum to the second drum.

### {Advantageous Effects of Invention}

With the gas-turbine cooling method according to the above-described second aspect, a gas turbine can efficiently be cooled by using steam, without using high-pressure steam generated in an exhaust-heat recovery boiler and without decreasing quantity of generated high-pressure steam.

### {Brief Description of Drawings}

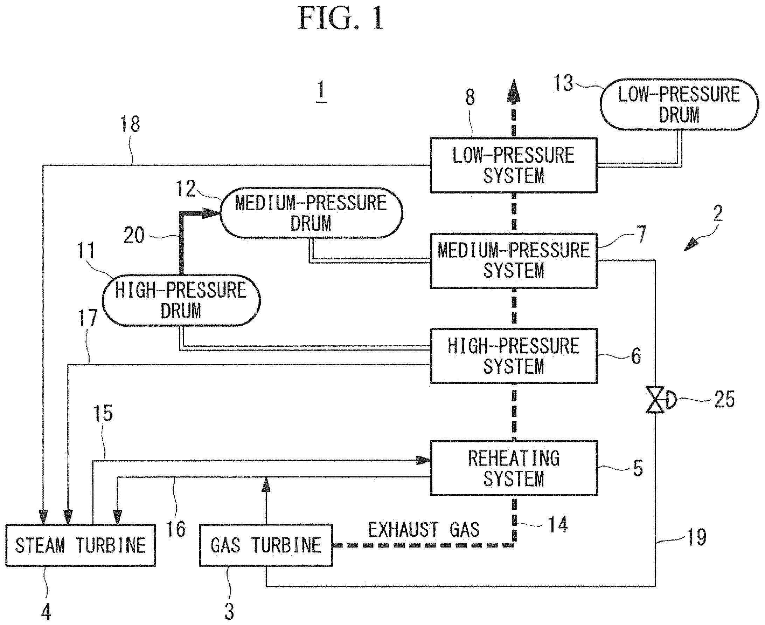

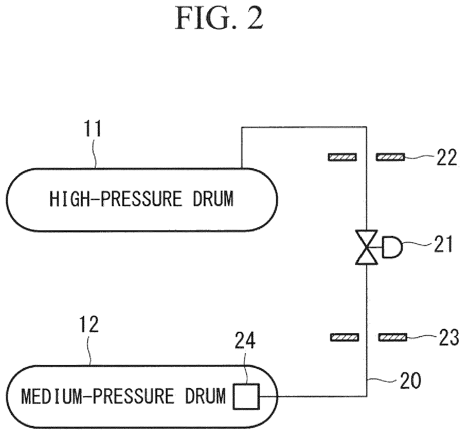

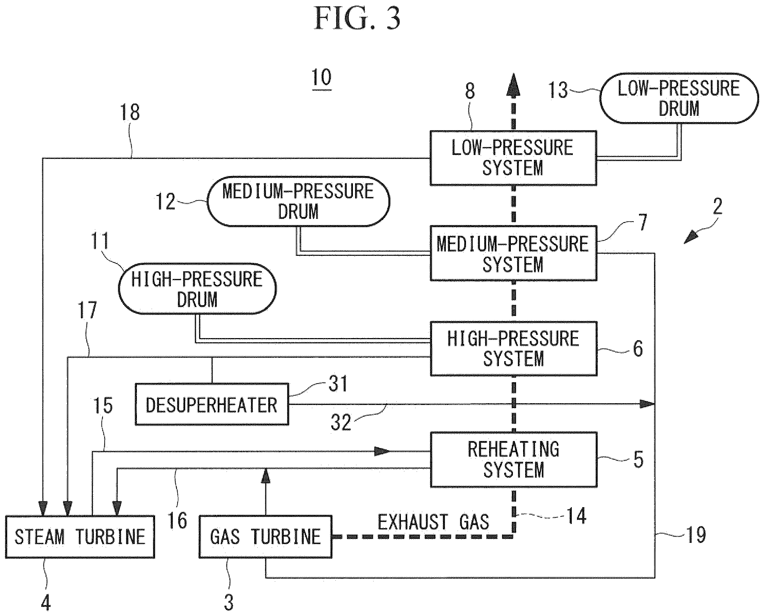

{Fig. 1} Fig. 1 is a diagram showing, in outline, the configurations of an exhaust-heat recovery system and a gas-turbine cooling system according to an embodiment of the present invention.
{Fig. 2} Fig. 2 is a diagram showing, in outline, the configuration of the gas-turbine cooling system according to the embodiment.
{Fig. 3} Fig. 3 is a diagram showing, in outline, the configurations of a conventional exhaust-heat recovery system and gas-turbine cooling system.

### {Description of Embodiment}

An embodiment according to the present invention will be described below with reference to the drawings.

An exhaust-heat recovery system and a gas-turbine cooling system according to the embodiment of the present invention are employed in a plant 1, for example, a Gas-Turbine Combined Cycle (GTCC), an Integrated coal Gasification Combined Cycle (IGCC), and so forth, having an exhaust-heat recovery boiler 2 and a gas turbine 3.

The gas-turbine cooling system is constituted of, for example, the exhaust-heat recovery boiler 2, the gas turbine 3, a medium-pressure steam pipe 19 (first flow channel) that supplies medium-pressure steam from a medium-pressure system 7 of the exhaust-heat recovery boiler 2 to the gas turbine 3, a steam supplying pipe 20 (second flow channel) that supplies saturated steam from a high-pressure drum 11 to a medium-pressure drum 12, and so forth.

Exhaust gas from the gas turbine 3 is supplied to the exhaust-heat recovery boiler 2 via an exhaust-gas supply channel 14. Then, the exhaust-heat recovery boiler 2 generates steam by means of heat exchange with heat of the exhaust gas (exhaust heat). As shown in Fig. 1, the exhaust-heat recovery boiler 2 is provided with, for example, a reheating system 5, a high-pressure system 6, the medium-pressure system 7, a low-pressure system 8, the high-pressure drum 11, the medium-pressure drum 12, a low-pressure drum 13, and so forth.

In the exhaust-heat recovery boiler 2, the reheating system 5, the high-pressure system 6, the medium-pressure system 7, and the low-pressure system 8 are sequentially disposed along the flow direction of the exhaust gas. The reheating system 5 includes a reheater, and steam extracted from a steam turbine 4 is supplied to the reheating system 5 via a cold reheat steam pipe 15 to be heated by the reheater of the reheating system 5. The steam heated at the reheating system 5 is supplied to the steam turbine 4 via a hot reheat steam pipe 16 and drives the steam turbine 4.

The high-pressure system 6 includes a high-pressure superheater and a high-pressure evaporator, and water from the high-pressure drum 11 is supplied to the high-pressure evaporator of the high-pressure system 6. The water supplied from the high-pressure drum 11 is heated by the high-pressure evaporator of the high-pressure system 6, thus generating steam. The steam is heated by the high-pressure superheater, thus generating high-pressure steam. The high-pressure steam is supplied to the steam turbine 4 via a high-pressure steam pipe 17 and drives the steam turbine 4.

The low-pressure system 8 includes a low-pressure evaporator and a low-pressure superheater, and water from the low-pressure drum 13 is supplied to the low-pressure evaporator of the low-pressure system 8. The water supplied from the low-pressure drum 13 is heated by the low-pressure evaporator of the low-pressure system 8, thus generating steam. The steam is superheated by the low-pressure superheater, thus generating low-pressure steam. The generated low-pressure steam is supplied to the steam turbine 4 via a low-pressure steam pipe 18 and drives the steam turbine 4.

The medium-pressure system 7 includes a medium-pressure evaporator and a medium-pressure superheater, and water from the medium-pressure drum 12 is supplied to the medium-pressure evaporator of the medium-pressure system 7. The water supplied from the medium-pressure drum 12 is heated by the medium-pressure evaporator of the medium-pressure system 7, thus generating steam. The steam is superheated by the medium-pressure superheater, thus generating medium-pressure steam. The entire flow or a portion of the generated medium-pressure steam is supplied to a cooling system of the gas turbine 3 via a medium-pressure steam pipe 19 and cools relevant portions. The cooling system of the gas turbine 3 is provided at, for example, high-temperature portions such as a tailpipe, a housing, and so forth of a combustor provided in the gas turbine 3. The required steam flow of the medium-pressure steam to be supplied from the medium-pressure drum 12 to the gas turbine 3 via the medium-pressure steam pipe 19 is adjusted based on the cooling state of the gas turbine 3. A control valve 25 is provided in the medium-pressure steam pipe 19, and the steam flow is adjusted therewith.

The outlet temperature of the gas turbine 3 is monitored and managed at the gas turbine 3, and the cooling state of the gas turbine 3 is indirectly judged based on, for example, the steam flow, temperature, pressure, and so forth of steam flow from the cooling system of the gas turbine 3 after cooling the gas turbine 3. For example, when the gas turbine 3 is judged to be insufficiently cooled, the control valve 25 is adjusted toward the open side, thus increasing the steam flow of the medium-pressure steam to be supplied to the cooling system of the gas turbine 3. On the other hand, when the gas turbine 3 is judged to be excessively cooled, the control valve 25 is adjusted toward the closed side, thus decreasing the steam flow of the medium-pressure steam.

The saturated steam is supplied from the high-pressure drum 11 to the medium-pressure drum 12 through the steam supplying pipe 20. In the case in which it is judged that the medium-pressure steam at the medium-pressure system 7 based on the water supplied from the medium-pressure drum 12 alone is insufficient relative to the steam flow required to cool the gas turbine 3, the saturated steam is supplied from the high-pressure drum 11 to the medium-pressure drum 12 via the steam supplying pipe 20. By doing so, the medium-pressure steam supplied to the cooling system of the gas turbine 3 can be supplemented with the steam supplied from the high-pressure drum 11 to the medium-pressure drum 12.

The steam used to cool the gas turbine 3 is, for example, supplied to the high-temperature reheat steam pipe 16 to be reused in driving the steam turbine 4.

With the gas turbine 3, a turbine is driven by combusting fuel gas, a main shaft coupled with a generator is rotated together with the turbine, and thus, the generator is driven and generates power. The fuel gas combusted in the gas turbine 3 is exhausted as exhaust gas. Because the gas turbine 3 reaches a high temperature due to the combustion of the fuel gas, the gas turbine 3 is cooled by a cooling medium in order to reduce the influence of the heat. As the cooling medium, for example, the steam generated in the exhaust-heat recovery boiler 2 is used.

With the steam turbine 4, the steam generated in the exhaust-heat recovery boiler 2 is supplied to drive the turbine. A main shaft of the steam turbine 4 is coupled with a generator and is rotated together with the turbine, and thus, the generator is driven and generates power. Note that, with regard to the generator, one generator may be coupled both with the gas turbine 3 and the steam turbine 4, or different generators may individually be coupled with the gas turbine 3 and the steam turbine 4.

In an example shown in Fig. 1, the reheated steam, the high-pressure steam, and the low-pressure steam are supplied to the steam turbine 4 from the reheating system 5, the high-pressure system 6, and the low-pressure system 8 of the exhaust-heat recovery boiler 2, respectively, thus driving the turbine.

Next, the gas-turbine cooling system according to this embodiment will be described with reference to Fig. 2.

In this embodiment, the steam supplying pipe 20 that connects the high-pressure drum 11 (first drum) and the medium-pressure drum 12 (second drum) is provided. As shown in Fig. 2, the steam supplying pipe 20 is constituted of a control valve 21, a flow flow meter 22, an orifice 23, a gas-liquid separator 24, and so forth.

The control valve 21 of the steam supplying pipe 20 is opened and closed in accordance with instructions from the control valve 25 of the medium-pressure steam pipe 19. When cooling the gas turbine 3, in the case in which the steam generated at the medium-pressure system 7 is insufficient, the saturated steam in the high-pressure drum 11 is supplied to the medium-pressure drum 12 via the steam supplying pipe 20. The steam flow of the saturated steam to be supplied from the high-pressure drum 11 to the medium-pressure drum 12 is determined based on a steam flow in the medium-pressure steam pipe 19.

For example, in the case in which it is judged that the medium-pressure steam generated at the medium-pressure system 7 based on the water supplied from the medium-pressure drum 12 alone is insufficient relative to the steam flow required to cool the gas turbine 3, the control valve 21 is adjusted toward the open side, thus increasing the steam flow of the saturated steam. On the other hand, when the gas turbine 3 is judged to be excessively cooled, the control valve 21 is adjusted toward the closed side, thus decreasing the steam flow of the saturated steam.

The flow flow meter 22 is provided in the steam supplying pipe 20 and measures the steam flow of the saturated steam flow in the steam supplying pipe 20. The orifice 23 is provided at a subsequent stage of the control valve 21 in the steam supplying pipe 20. With the orifice 23, it is possible to suppress a sudden decrease in the pressure at the control valve 21, and it is possible to decrease saturated water colliding with the control valve 21 due to the steam flow in the steam supplying pipe 20. As a result, it is possible to prevent breakage and corrosion of the control valve 21. Note that, in order to prevent trouble caused by water generated when decreasing the pressure of the saturated steam at the orifice 23, a baffle plate may be provided in a subsequent stage of the orifice 23.

The gas-liquid separator 24 is provided so as to be positioned downstream of the steam supplying pipe 20 and also so as to be upstream of the medium-pressure drum 12 or inside the medium-pressure drum 12. The gas-liquid separator 24 separates liquid and steam from the saturated steam flow in the steam supplying pipe 20. The steam/water separator 24 may employ any system, such as a system in which steam and liquid are separated by making a fluid pass through a metallic mesh or a corrugated plate, a system in which steam and water are separated by utilizing centrifugal force, and so forth. The steam obtained by the separation is directly supplied to the medium-pressure system 7 without modification, and the water obtained by the separation is temporarily stored in the medium-pressure drum 12.

In the case in which the gas-liquid separator 24 is not provided, a portion of the saturated steam supplied via the steam supplying pipe 20 condenses in the medium-pressure drum 12, and, consequently, in the worst conditions, there is a risk of the water level in the medium-pressure drum 12 suddenly increasing, depending on the supplied flow of the saturated steam. On the other hand, by providing the gas-liquid separator 24, the water level in the medium-pressure drum 12 is affected only by the liquid separated by the gas-liquid separator 24. Therefore, it is possible to minimize water-level, fluctuations in the medium-pressure drum 12.

In addition, although the water level in the medium-pressure drum 12 is normally regulated by three factors (water level, supply water flow, and generated steam flow), in this embodiment, by measuring the saturated steam flow supplied from the high-pressure drum 11 to the medium-pressure drum 12, the same drum-water-level control as has normally been done can be performed for both the high-pressure drum 11 and the medium-pressure drum 12. In addition, as described above, because it is possible to minimize the water-level fluctuations in the medium-pressure drum 12 by providing the gas-liquid separator 24 upstream of the medium-pressure drum 12 or inside the medium-pressure drum 12, it is also possible to minimize operational fluctuations of the medium-pressure drum 12, caused by whether or not the saturated steam is supplied to the medium-pressure drum 12.

The operational effects of this embodiment will be described below.

In order to increase the total steam flow to be supplied to the cooling system of the gas turbine 3, it is conceivable to use, unlike this embodiment, the high-pressure steam generated at the high-pressure system 6, as in a plant 10 of a related art shown in Fig. 3. Specifically, the high-pressure steam is guided to a desuperheater 31 by branching the high-pressure steam pipe 17 between the high-pressure system 6 and the steam turbine 4, and the temperature and pressure of the high-pressure steam are decreased. Then, the high-pressure steam whose temperature and pressure have been decreased is supplied to the cooling system of the gas turbine 3 via a steam pipe 32 and the medium-pressure steam pipe 19. However, with this method, although it is not necessary to increase the steam to be supplied from the medium-pressure system 7 to the cooling system to the gas turbine 3, this method involves additional tasks of decreasing the temperature and pressure of the high-temperature, high-pressure steam, and the plant efficiency may be deteriorated due to such a temperature-decreasing process.

In addition, it is also conceivable to extract low-temperature saturated steam from the high-pressure drum 11 and to use it as cooling water for the gas turbine 3, instead of using the steam from the high-pressure system 6, which requires the temperature-decreasing process. However, saturated water is generated after extracting the saturated steam from the high-pressure drum 11 and decreasing the pressure thereof, and this generated water may cause damage to equipment and piping in the subsequent stages thereof, and thus, it is difficult to employ this method.

On the other hand, with this embodiment, the saturated steam from the high-pressure drum 11 is supplied to the medium-pressure drum 12 after decreasing the pressure, thereof, and gas-liquid separation is performed in the medium-pressure drum 12. Then, the medium-pressure steam is used as the cooling steam for the gas turbine without changing the control of the medium-pressure drum 12 itself from the conventional method. At this time, the steam for cooling the gas turbine 3 can be increased without employing a design in which the high-pressure steam flow is suppressed and the medium-pressure steam flow is increased. Therefore, it is possible to provide an economical exhaust-heat recovery boiler 2 by increasing the medium-pressure steam flow and without having to suppress the high-pressure steam flow, whose contribution to the plant performance is high. In addition, because droplets and water in the form of mist contained in the cooling steam can be decreased, it is possible to avoid trouble such as heat shock and so forth in a transition piece of the cooling system and so forth, which are subjected to a high heat load.

Note that, in this embodiment, although a case in which the high-pressure drum 11 and the medium-pressure drum 12 are connected, the saturated steam is supplied from the high-pressure drum 11 to the medium-pressure drum 12, and the steam flow at the medium-pressure system 7 is increased by using that steam has been described, the present invention is not limited to this example. For example, the present invention can also be employed in a system in which steam is supplied from the low-pressure drum 13 to other types of equipment. In this case, the steam flow generated at the low-pressure system 8 is increased by connecting the high-pressure drum 11 and the low-pressure drum 13 or by connecting the medium-pressure drum 12 and the low-pressure drum 13, and by supplying the saturated steam from the high-pressure drum 11 or the medium-pressure drum 12 to the low-pressure drum 13.

### {Reference Signs List}

1, 10 plant
2 exhaust-heat recovery boiler
3 gas turbine
4 steam turbine
5 reheating system
6 high-pressure system (first system)
7 medium-pressure system (second system)
8 low-pressure system
11 high-pressure drum (first drum)
12 medium-pressure drum (second drum)
13 low-pressure drum
14 exhaust-gas supply channel
15 cold reheat steam pipe
16 hot reheat steam pipe
17 high-pressure steam pipe
18 low-pressure steam pipe
19 medium-pressure steam pipe (first flow channel)
20 steam supplying pipe (second flow channel)
21 control valve (steam-flow adjusting means)
22 flow flow meter
23 orifice
24 gas-liquid separator
25 control valve
31 attemperator
32 steam pipe

## Claims

1. A gas-turbine cooling system comprising:
a gas turbine (3);
an exhaust-heat recovery boiler (2) having a first system (6) arranged to generate first steam by means of heat exchange with exhaust heat from the gas turbine (3), a first drum (11) arranged to supply water and steam to the first system (6), a second system (7) arranged to generate second steam having lower pressure than the first steam by means of heat exchange with the exhaust heat from the gas turbine (3), and a second drum (12) arranged to supply water and steam to the second system (7);
a first flow channel (19) that connects the second system (7) and a cooling system of the gas turbine (3) and that is arranged to supply the second steam from the second system (7) to the cooling system; and
a second flow channel (20) that connects the first drum (11) and the second drum (12) and that is arranged to supply saturated steam in the first drum (11) from the first drum (11) to the second drum (12).

2. A gas-turbine cooling system according to claim 1, further comprising:
a steam-flow adjusting means (21) for adjusting a steam flow of the saturated steam flow in the second flow channel (20) based on a cooling state of the gas turbine (3).

3. A gas-turbine cooling system according to claim 1 or 2, further comprising:
a gas-liquid separator (24) that is provided so as to be downstream of the second flow channel (20) and also so as to be upstream of the second drum (12) or inside the second drum (12) .

4. A gas-turbine cooling method for a gas-turbine cooling system provided with:
a gas turbine (3); and
an exhaust-heat recovery boiler (2) having a first system (6) that generates first steam by means of heat exchange with exhaust heat from the gas turbine (3), a first drum (11) that supplies water and steam to the first system (6), a second system (7) that generates second steam having lower pressure than the first steam by means of heat exchange with the exhaust heat from the gas turbine (3), and a second drum (12) that supplies water and steam to the second system (7),
the gas-turbine cooling method comprising:
a step of supplying the second steam from the second system (7) to a cooling system of the gas turbine (3); and
a step of supplying saturated steam in the first drum (11) from the first drum (11) to the second drum (12).

5. A gas-turbine cooling method for a gas-turbine cooling system according to claim 4, wherein the step of supplying saturated steam in the first drum (11) from the first drum (11) to the second drum (12) is carried out in a case in which it is judged that the second steam at the second system (7) based on the water supplied from the second drum (12) alone is insufficient relative to the steam flow required to cool the gas turbine (3).

## Patentansprüche

1. Ein Gasturbinen-Kühlsystem mit:
einer Gasturbine (3)
einem Abgas-Wärmerückgewinnungsboiler (2) mit einem ersten System (6), das angeordnet ist, um ersten Dampf mittels Wärmetausch mit Abgaswärme von der Gasturbine (3) zu erzeugen, einer ersten Trommel (11), die angeordnet ist, um Wasser und Dampf zu dem ersten System (6) zuzuführen, einem zweiten System (7), das angeordnet ist, um zweiten Dampf mit niedrigerem Druck als der erste Dampf mittels Wärmetausch mit der Abgaswärme von der Gasturbine (3) zu erzeugen, und einer zweiten Trommel (12), die angeordnet ist, um Wasser und Dampf zu dem zweiten System (7) zuzuführen,
einem ersten Strömungskanal (19), der das zweite System (7) und ein Kühlsystem der Gasturbine (3) verbindet und der angeordnet ist, um den zweiten Dampf von dem zweiten System (7) zu dem Kühlsystem zuzuführen, und
einem zweiten Strömungskanal (20), der die erste Trommel (11) und die zweite Trommel (12) verbindet und der angeordnet ist, um gesättigten Dampf in der ersten Trommel (11) von der ersten Trommel (11) zu der zweiten Trommel (12) zuzuführen.

2. Ein Gasturbinen-Kühlsystem gemäß Anspruch 1, ferner mit:
einem Dampf-Strömungseinstellmittel (21) zum Einstellen einer Dampfströmung der gesättigten Dampfströmung in dem zweiten Strömungskanal (20) basierend auf einem Kühlungszustand der Gasturbine (3).

3. Ein Gasturbinen-Kühlsystem gemäß Anspruch 1 oder 2, ferner mit:
einem Gas-Flüssigkeits-Separator (24), der so vorgesehen ist, dass er sich stromab des zweiten Strömungskanals (20) befindet und so, dass er sich stromauf der zweiten Trommel (12) oder im Inneren der zweiten Trommel (12) befindet.

4. Ein Gasturbinen-Kühlverfahren für ein Gasturbinen-Kühlsystem, das versehen ist mit:
einer Gasturbine (3), und
einem Abgas-Wärmerückgewinnungsboiler (2) mit einem ersten System (6), das ersten Dampf mittels Wärmetausch mit Abgaswärme von der Gasturbine (3) erzeugt, einer ersten Trommel (11), die Wasser und Dampf zu dem ersten System (6) zuführt, einem zweiten System (7), das zweiten Dampf mit einem niedrigerem Druck als der erste Dampf mittels Wärmetausch mit der Abgaswärme von der Gasturbine (3) erzeugt, und einer zweiten Trommel (12), die Wasser und Dampf zu dem zweiten System (7) zuführt,
wobei das Gasturbinen-Kühlverfahren aufweist:
einen Schritt des Zuführens des zweiten Dampfs von dem zweiten System (7) zu einem Kühlsystem der Gasturbine (3), und
einen Schritt des Zuführens von gesättigtem Dampf in der ersten Trommel (11) von der ersten Trommel (11) zu der zweiten Trommel (12).

5. Ein Gasturbinen-Kühlverfahren für ein Gasturbinen-Kühlsystem gemäß Anspruch 4, wobei der Schritt des Zuführens von gesättigtem Dampf in der ersten Trommel (11) von der ersten Trommel (11) zu der zweiten Trommel (12) in einem Fall ausgeführt wird, in dem festgestellt wird, dass der zweite Dampf an dem zweiten System (7) basierend auf dem von der zweiten Trommel (12) zugeführten Wasser alleine relativ zu der zum Kühlen der Gasturbine (3) erforderlichen Dampfströmung nicht ausreichend ist.

## Revendications

1. Système de refroidissement de turbine à gaz, comprenant :
une turbine (3) à gaz;
une chaudière (2) de récupération de la chaleur d'échappement, ayant un premier système (6) agencé pour produire de la première vapeur au moyen d'un échange de chaleur avec de la chaleur d'échappement de la turbine (3) à gaz, un premier ballon (11) agencé pour alimenter en eau et en vapeur le premier système (6), un deuxième système (7) agencé pour produire de la deuxième vapeur ayant une pression plus basse que la première vapeur, au moyen d'un échange de chaleur avec de la chaleur d'échappement de la turbine (3) à gaz et un deuxième ballon (12) agencé pour alimenter en eau et en vapeur le deuxième système (7);
un premier conduit (19) d'écoulement, qui met le deuxième système (7) en communication avec un système de refroidissement de la turbine (3) à gaz et qui est agencé pour envoyer la deuxième vapeur du deuxième système (7) au système de refroidissement et
un deuxième conduit (20) d'écoulement, qui met le premier ballon (11) en communication avec le deuxième ballon (12) et qui est agencé pour envoyer, du premier ballon (11) au deuxième ballon (12), de la vapeur saturée du premier ballon (11) .

2. Système de refroidissement de turbine à gaz suivant la revendication 1, comprenant en outre :
un moyen (21) de réglage du débit de la vapeur pour régler un débit de vapeur saturée dans le deuxième conduit (20) d'écoulement sur la base d'un état de refroidissement de la turbine (3) à gaz.

3. Système de refroidissement de turbine à gaz suivant la revendication 1 ou 2, comprenant en outre :
un séparateur (24) gaz-liquide, qui est prévu de manière à être en aval du deuxième conduit (20) d'écoulement et également en amont du deuxième ballon (12) ou à l'intérieur du deuxième ballon (12).

4. Procédé de refroidissement d'une turbine à gaz pour un système de refroidissement de turbine à gaz pourvu de :
une turbine (3) à gaz et
une chaudière (2) de récupération de la chaleur d'échappement, ayant un premier système (6) agencé qui produit de la première vapeur au moyen d'un échange de chaleur avec de la chaleur d'échappement de la turbine (3) à gaz, un premier ballon (11) qui alimente en eau et en vapeur le premier système (6), un deuxième système (7) qui produit de la deuxième vapeur ayant une pression plus basse que la première vapeur, au moyen d'un échange de chaleur avec de la chaleur d'échappement de la turbine (3) à gaz, et un deuxième ballon (12) qui alimente en eau et en vapeur le deuxième système (7);
le procédé de refroidissement d'une turbine à gaz comprenant :
un stade d'envoi de la deuxième vapeur du deuxième système (7) à un système de refroidissement de la turbine (3) à gaz et
un stade d'envoi, du premier tambour (11) au deuxième tambour (12) de vapeur saturée du premier tambour (11).

5. Procédé de refroidissement d'une turbine à gaz pour un système de refroidissement d'une turbine à gaz suivant la revendication 4, dans lequel on effectue le stade d'envoi, du premier tambour (11) au deuxième tambour (12), de la vapeur saturée du premier tambour (11), dans le cas où l'on juge que la deuxième vapeur au deuxième système (7), sur la base de l'eau envoyée du deuxième tambour seul, est insuffisante par rapport au courant de vapeur nécessaire pour refroidir la turbine (3) à gaz.
